# EUROPÄISCHE PATENTSCHRIFT

(11) **EP 0 689 567 B1**
(45) Veröffentlichungstag und Bekanntmachung des Hinweises auf die Patenterteilung: **09.12.1998**
(21) Anmeldenummer: 94911161.1
(22) Anmeldetag: 12.03.1994
(51) Int. Cl.: C08L 75/04, C08J 7/04

(54) **FÜLLSTOFFPASTE ZUR VERWENDUNG IN BASISLACKEN ZUR BESCHICHTUNG VON POLYOLEFIN-SUBSTRATEN, BASISLACKE SOWIE VERFAHREN ZUR DIREKTLACKIERUNG VON POLYOLEFIN-SUBSTRATEN**
FILLER PASTES FOR USE IN BASE PAINTS FOR COATING POLYOLEFIN SUBSTRATES, BASE PAINTS OF THIS KIND AND METHODS OF DIRECTLY PAINTING POLYOLEFIN SUBSTRATES
CHARGE PATEUSE UTILE DANS DES LAQUES DE BASE POUR REVETEMENT DE SUBSTRATS EN POLYOLEFINE, LAQUE DE BASE ET PROCEDE DE LAQUAGE DIRECT DE SUBSTRATS EN POLYOLEFINE

(30) Priorität: 19.03.1993 DE 4308859
(43) Veröffentlichungstag der Anmeldung: 03.01.1996
(73) Patentinhaber: BASF Coatings Aktiengesellschaft, 48165 Münster (DE)
(72) Erfinder: LEIBFARTH, Frank, D-72555 Metzingen (DE); OSLOWSKI, Hans-Josef, D-48163 Münster (DE); BÖHM, Doris-Maria, D-48165 Münster (DE); GÖBEL, Andreas, D-50737 Köln (DE)
(86) Internationale Anmeldenummer: EP9400772
(87) Internationale Veröffentlichungsnummer: WO9421730

(56) Entgegenhaltungen:
- EP-A- 0 238 702
- CA-A- 980 936
- US-A- 3 594 449
- US-A- 3 676 391
- DATABASE WPI Week 8437, Derwent Publications Ltd., London, GB; AN 84-228099 & JP,A,59 135 231 (ASAHI PEN KK) 3. August 1984

## Beschreibung

Die vorliegende Erfindung betrifft Füllstoffpasten zur Verwendung in Basislacken zur Beschichtung von Polyolefin-Substraten, derartige Füllstoffpasten enthaltende Basislacke sowie Verfahren zur Direktlackierung von Polyolefin-Substraten.

Anbauteile für die Automobilindustrie sowie eine Vielzahl von Teilen für Nicht-Automobil-Anwendungen werden zunehmend aus Kunststoff gefertigt. Neben seit Jahrzehnten gebräuchlichen Werkstoffen wie Polyamid und ungesättigten Polyesterharz-Preßmassen werden zunehmend Polyolefine und Polyolefin-Blends eingesetzt. Die Lackierung derartiger Polyolefine, z. B. des für die Automobilindustrie bevorzugt eingesetzten Polypropylens und seiner Blends (z. B. PP-EPDM), ist aber wegen der geringen Oberflächenspannung dieser Kunststoffe problematisch.

Kunststoffbeschichtungen müssen insbesondere eine gute Haftung auf dem jeweiligen Kunststoffsubstrat aufweisen. Es ist bekannt, Kunststoffteile aus Polyolefinen, wie z. B. aus Polypropylen, physikalisch und/oder chemisch vorzubehandeln, um eine gute Haftung auf dem Kunststoffsubstrat zu gewährleisten. Dabei sind folgende Verfahren bekannt: Das Beflammen, die Plasma-Vorbehandlung, die Corona-Entladung, die chemische Oxidation, z. B. mit Chromschwefelsäure, sowie die chemische Haftvermittlung durch Applikation von chlorierten Polyolefinen auf den Kunststoffsubstraten. Üblich ist die Beflammung im ersten Verfahrensschritt, um eine ausreichende Haftung sicherzustellen, wobei anschließend eine Grundierung appliziert wird, um insbesondere Oberflächenfehler der Kunststoffsubstrate abzudecken. Eine direkte und damit grundierungsfreie Beschichtung von Effekt-Basislacken oder Uni-Basislacken auf Polyolefin-Substrate ist problematisch, da zum einen die Haftung zum Untergrund nicht gewährleistet ist und zum anderen Oberflächenfehler, wie z. B. Fließlinien, nicht ausreichend abgedeckt werden können. Ein einfaches Zumischen chlorierter Polyolefine als Haftvermittler zu Effekt-Basislacken oder Uni-Basislacken für die Beschichtung von Polyolefin-Substraten ist aus mehreren Gründen von Nachteil. Die als Haftvermittler verwendeten chlorierten Polyolefine beeinflussen in allen gängigen Basislacken die Effektausbildung ("Flop") in negativer Weise. Die chlorierten Polyolefine zeigen starke Unverträglichkeiten mit üblichen Basislack-Bindemittel-Systemen. Außerdem sind die als Haftvermittler verwendeten chlorierten Polyolefine sehr lichtempfindlich, und sie können bei unzureichendem Lichtschutz im Lacksystem zu vorzeitiger Verwitterung führen.

Aus der DE-A-40 14 212 sind Effekt-Basislacke zur Beschichtung von Polypropylen-Substraten bekannt, wobei die Effekt-Basislacke physikalisch trocknende Bindemittel, chlorierte Polyolefine, Celluloseacetobutyrat, Effektpigmente, z. B. Metallic-Pigmente oder Pigmente auf Basis von Glimmerplättchen bzw. Mica-Plättchen, ggf. Farbpigmente und organische Lösemittel enthalten.

Die beschriebenen Basislacke können direkt auf das Kunststoffsubstrat aufgebracht werden, ohne daß es zu Haftungsproblemen kommt. Bei der Verwendung der aus der DE-A-40 14 212 bekannten Effekt-Basislacke zur Beschichtung von Kunststoffsubstraten ohne vorherige Grundierung der Kunststoffsubstrate tritt jedoch das Problem auf, daß vorhandene Oberflächenfehler, wie z. B. Fließlinien, nicht ausreichend abgedeckt werden können. Außerdem treten bei Verwendung der mit den Effekt-Basislacken beschichteten Kunststoffsubstrate auf dem Automobilsektor Probleme hinsichtlich der Steinschlagbeständigkeit auf.

Außerdem sind aus der EP-A-238 702 und aus der JP-A-59 135 231 Zweikomponenten-Polyurethanlacke zur einschichtigen Beschichtung von Polyolefin-Substraten bekannt, die neben chlorierten Polyolefinen hydroxylgruppenhaltige Bindemittel und Isocyanatvernetzer enthalten.

Die der vorliegenden Erfindung zugrunde liegende Aufgabe bestand daher darin, die zuvor geschilderten Nachteile des Standes der Technik zu beseitigen. So sollten Basislacke zur Beschichtung von Polyolefin-Substraten, wie z. B. Polypropylen, Polyethylen, Polypropylen-Copolymeren sowie Polypropylen-Blends, wie PP-EPDM, zur Verfügung gestellt werden, mit denen eine direkte Lackierung der Polyolefin-Substrate möglich ist, das heißt bei deren Verwendung auf die Verwendung von Grundierungen verzichtet werden kann, was eine erhebliche Kostenersparnis zur Folge hat. Die Basislacke sollten eine gute Haftung auf dem Polyolefin-Substrat aufweisen, und sie sollten trotz Einsparung einer Grundierung insbesondere zu einer guten Abdeckung von Oberflächenfehlern, wie z. B. Fließlinien, führen.

Die Aufgabe wird überraschenderweise gelöst durch eine Füllstoffpaste A), die in Basislacken eingesetzt wird, bzw. durch Basislacke B), die zur direkten Beschichtung, d. h. primerfreien bzw. grundierungsfreien Beschichtung, von Polyolefin-Substraten geeignet sind.

Die vorliegende Erfindung betrifft eine Füllstoffpaste A), enthaltend
a1) 5 bis 50 Gew.-%, bevorzugt 30 bis 45 Gew.-%, eines Polyurethanharzes oder mehrerer Polyurethanharze,
a2) 0,5 bis 13 Gew.-% eines oder mehrerer chlorierter Polyolefine mit einem Chlorgehalt von 10 bis 40 Gew.-%, bezogen auf den Festkörper der chlorierten Polyolefine, und einem durchschnittlichen zahlenmittleren Molekulargewicht von 5 000 bis 150 000,
a3) 0 bis 50 Gew.-%, bevorzugt 0 bis 10 Gew.-%, eines oder mehrerer sich von al) unterscheidender physikalisch trocknender Bindemittel,
a4) 5 bis 35 Gew.-% eines oder mehrerer Füllstoffe und/oder Extender,
a5) 0 bis 15 Gew.-% Farb- und/oder Effektpigmente,
a6) 0 bis 5 Gew.-% eines oder mehrerer Rheologiehilfsmittel und
a7) 20 bis 60 Gew.-% organische Lösemittel,
wobei die Summe der Komponenten a1) bis a7) jeweils 100 Gew.-% beträgt.

Die Füllstoffpaste A) wird in Basislacken B) zur direkten Beschichtung von Polyolefin-Substraten eingesetzt. Im folgenden werden die einzelnen Bestandteile der erfindungsgemäßen Füllstoffpaste A) näher erläutert.

Die Füllstoffpaste A) enthält 5 bis 50 Gew.-%, bevorzugt 30 bis 45 Gew.-%, eines Polyurethanharzes oder mehrerer Polyurethanharze al). Es handelt sich dabei um elastische, aromatische und/oder aliphatische, verzweigte oder lineare Polyurethanelastomere mit einem guten physikalischen Trocknungsvermögen und einem hohen spezifischen Volumen. Die Polyurethanelastomere können freie, zur Vernetzung zur Verfügung stehende Hydroxylgruppen aufweisen. Die physikalisch trocknenden Polyurethanelastomere sind einerseits hochmolekular, andererseits weisen sie trotz ihres hohen Molekulargewichts eine gute Löslichkeit bzw. relativ niedrige Viskosität auf. Geeignete Polyurethanharze sind im Handel erhältlich unter der Bezeichnung Uraflex XP 221 und XP 222 (Hersteller: DSM) sowie Desmolac 2100 (Hersteller: Bayer).

Die erfindungsgemäße Füllstoffpaste A) enthält 0,5 bis 13 Gew.-% eines oder mehrerer chlorierter Polyolefine mit einem Chlorgehalt von 10 bis 40 Gew.-%, bezogen auf den Festkörper der chlorierten Polyolefine, und einem durchschnittlichen zahlenmittleren Molekulargewicht von 5 000 bis 150 000 (Komponente a2). Die chlorierten Polyolefine werden z. B. durch direkte Chlorierung von Polyolefinen oder durch Pfropfung von modifizierten Polyolefinen hergestellt. Derartige chlorierte Polyolefine sind dem Fachmann geläufig und im Handel erhältlich. Ein geeignetes Handelsprodukt einer Lösung eines chlorierten Polyolefinharzes ist das Produkt Eastman CP 343-1 (Hersteller: Eastman).

Als Komponente a3) enthält die erfindungsgemäße Füllstoffpaste A) 0 bis 50 Gew.-%, bevorzugt 0 bis 10 Gew.-%, eines oder mehrerer sich von al) unterscheidender physikalisch trocknender Bindemittel. Unter physikalischem Trocknungsvermögen ist zu verstehen, daß die Bindemittel nach Abgabe der organischen Lösemittel aus dem Lackfilm bei Trocknung unterhalb von etwa 50 °C dem Lackfilm keine klebrigen Eigenschaften mehr verleihen. Bindemittel dieser Art sind dem Fachmann geläufig; es handelt sich dabei um übliche Bindemittel, wie sie als Lackrohstoffe im Handel erhältlich sind. Beispiele für geeignete physikalisch trocknende Bindemittel sind Polyesterharze, Alkydharze, Polyacrylatharze, Cellulosederivate, Melaminharze u. ä.. Die physikalisch trocknenden Bindemittel der Komponente a3) beeinflussen technologische Eigenschaften, wie z. B. Überlackierbarkeit und das Trocknungsverhalten. Bevorzugt werden die sich von der Komponente a1) unterscheidenden, physikalisch trocknenden Bindemittel (a3) in einem Anteil von 0 bis 10 Gew.-% eingesetzt.

Die erfindungsgemäße Füllstoffpaste A) enthält 5 bis 35 Gew.-%, bevorzugt 20 bis 30 Gew.-%, eines oder mehrerer Füllstoffe und/oder Extender (Komponente a4)). Beispiele für geeignete Füllstoffe und/oder Extender sind silikatische Füllstoffe, wie beispielsweise Kaolin (China Clay), Talkum, Kieselkreide, verschiedene Glimmersorten, wie beispielsweise Eisenglimmer, sowie Siliciumcarbid und Quarzmehl; carbonatische Füllstoffe, wie beispielsweise Kreide und Dolomit; sulfatische Füllstoffe, wie beispielsweise Barium- und Calciumsulfat. Die Komponente a4) ist eine wesentliche Komponente der Füllstoffpaste A) und führt dazu, daß zum einen das mechanisch-technologische Niveau (z. B. bezüglich Steinschlagschutz) deutlich verbessert wird, zum anderen aber eine ausgezeichnete optische Abdeckung von Substratfehlern erreicht wird.

Gegebenenfalls können in der erfindungsgemäßen Füllstoffpaste A) bis zu 15 Gew.-% Farb- und/oder Effektpigmente eingesetzt werden. Beispiele für geeignete anorganische Farbpigmente sind Weißpigmente, wie beispielsweise Titandioxid, Bleiweiß, Zinkweiß, Schwarzpigmente, wie beispielsweise Ruß, Buntpigmente, beispielsweise Eisenoxid- und Chromoxid-Pigmente, oxidische Mischphasenpigmente. Als Effektpigmente können in der erfindungsgemäßen Füllstoffpaste A) Metallic-Pigmente oder Effektpigmente auf der Basis von Glimmerplättchen bzw. Mica-Plättchen eingesetzt werden, wie sie z. B. auf dem Gebiet der Kraftfahrzeuglackierung üblich sind. Es können auch elektrisch leitfähige Pigmente verwendet werden. Der Einsatz von Farb- und Effektpigmenten incl. Ruß ist fakultativ und wird nur bei höchsten Ansprüchen an die Farbtongenauigkeit verwendet. In solchen Fällen wird ein hellgrau getönter Pastenzusatz für helle Farbtöne und ein dunkelgrau getönter Zusatz für dunkle Farbtöne empfohlen. Das Pigment/Bindemittelverhältnis der erfindungsgemäßen Füllstoffpaste A) beträgt etwa 1 : 0,6 - 2,0, bevorzugt 1 : 1,3 - 1,8, wobei bei der Bestimmung des Pigment/Bindemittelverhältnisses der Begriff "Pigment" alle anorganischen Bestandteile, wie z. B. Extender und anorganische Rheologiehilfsmittel, umfaßt.

Die erfindungsgemäßen Füllstoffpasten A) enthalten 0 bis 5 Gew.-% eines oder mehrerer Rheologiehilfsmittel, wie z. B. Wachse, Assoziativ-Verdicker, Schichtsilikate, organisch modifizierte Mineralstoffe u. ä., wie sie dem Fachmann geläufig und kommerziell erhältlich sind. Der Einsatz der Rheologiehilfsmittel ist fakultativ und dient zur Erfüllung höchster Ansprüche an die Standfestigkeit des Naßfilms. Durch die ausgewählten Bindemittel/Pigment-Kombinationen sowie durch das gewählte Bindemittel/Pigment-Verhältnis wird bereits eine sehr gute Standfestigkeit und damit Schichtdicke gewährleistet.

Die Komponente a7) der erfindungsgemäßen Füllstoffpasten besteht aus 20 bis 60 Gew.-% organischer Lösemittel. Dabei handelt es sich um übliche Lacklösemittel, wie niedermolekulare Ester, Aromaten, Glykolester, Glykolether usw., wobei die organischen Lösemittel insbesondere auf die Verträglichkeit mit den verwendeten Polyurethanharzen (Komponente al)) abgestimmt werden. Der Einsatz aliphatischer und aromatischer Verschnittmittel ist daher nur begrenzt möglich. Beispiele für besonders geeignete organische Lösemittel sind Xylole, Butylacetat und Ether bzw. Ester des Propylenglykols.

Die erfindungsgemäßen Füllstoffpasten A) werden hergestellt, indem die vorgesehenen Pigmente und Extender in einer Teilmenge des Gesamtbindemittels vordispergiert und anschließend zu ausreichender Kornfeinheit gemahlen werden. Das chlorierte Polyolefin wird entweder portionsweise bereits der Mahlung oder - bei kleineren Mengen - der Auflackmischung zugemischt, die dem Mahlgut anschließend zugegeben wird. Als Auflackmischung dienen die übrige Bindemittelmenge sowie Rheologiehilfsmittel und Lösemittel.

Die vorliegende Erfindung betrifft ebenfalls Basislacke B) zur Beschichtung von Polyolefin-Substraten, wobei die Basislacke B) die erfindungsgemäße Füllstoffpaste A) in einem Anteil von 10 bis 70 Gew.-% enthalten. Die Füllstoffpasten A) werden gemäß der vorliegenden Erfindung handelsüblichen Basislacken, die zur Beschichtung von Polyolefin-Substraten geeignet sind, zugesetzt. Die vorliegende Erfindung betrifft daher ebenfalls Basislacke B) zur Beschichtung von Polyolefin-Substraten, die dadurch gekennzeichnet sind, daß sie 10 bis 70 Gew.-% der zuvor beschriebenen Füllstoffpaste A) und 90 bis 30 Gew.-% einer üblichen Basislackzusammensetzung C), enthaltend ein oder mehrere Bindemittel, gegebenenfalls Rheologiehilfsmittel, Farb- und/oder Effektpigmente und organische Lösemittel, enthalten, wobei das Gesamtgewicht der Basislacke B) 100 Gew.-% beträgt. Bevorzugt enthalten die erfindungsgemäßen Basislacke B) 30 bis 60 Gew.-% der Füllstoffpaste A) sowie 70 bis 40 Gew.-% einer üblichen Basislackzusammensetzung C).

Übliche Basislackzusammensetzungen C), die zusammen mit der erfindungsgemäßen Füllstoffpaste A) zu dem erfindungsgemäßen Basislack B) kombiniert werden, sind solche aus handelsüblichen Rohstoffen, wie Polyestern, Polyacrylaten, Cellulosederivaten, Rheologiehilfsmitteln, wie z. B. Wachsen, sowie Farb- und/oder Effektpigmenten, wie beispielsweise Metallic-Pigmenten und Glimmerplättchen. Übliche Farbpigmente sind die bereits bei der Beschreibung der Komponente a5) der Füllstoffpaste A) zuvor beschriebenen Pigmente. Derartige Basislacke sind dem Fachmann bekannt und brauchen daher nicht weiter beschrieben zu werden. Besonders bevorzugt werden als Bindemittel für die Basislackzusammensetzung C) Polyacrylatharze, Polyesterharze und Alkydharze verwendet, denen Celluloseacetobutyrat zugesetzt wird.

Die zuvor beschriebenen erfindungsgemäßen Basislacke B) können ohne vorherige Grundierung der Polyolefin-Substrate auf den Untergrund aufgebracht werden, wobei die erhaltenen Beschichtungen eine ausgezeichnete Haftung aufweisen, und Oberflächenfehler, insbesondere Fließlinien, in hervorragender Weise abgedeckt werden.

Die vorliegende Erfindung betrifft daher ebenfalls ein Verfahren zur Direktlackierung von Polyolefin-Substraten, das dadurch gekennzeichnet ist, daß direkt auf das Polyolefin-Substrat der die Füllstoffpaste A) enthaltende Basislack B) aufgebracht wird, nach kurzer Zwischenablüftung ein Füllstoffpasten-freier Basislack appliziert wird, nach kurzem Ablüften mit einem Klarlack überlackiert wird und anschließend gemeinsam unter Erwärmen ausgehärtet wird. Der erfindungsgemäße Basislack B) wird also gemäß der vorliegenden Erfindung direkt auf das Polyolefin-Substrat appliziert. Dabei ist es möglich, aber nicht unbedingt erforderlich, das Polyolefin-Substrat einer Vorbehandlung (Beflammen, Plasma, Corona) zu unterziehen. Nach kurzer Zwischenablüftung wird dann ein üblicher Basislack appliziert, der jedoch keine Füllstoffpaste A) enthält. Beispiele für geeignete Füllstoffpasten-freie Basislacke sind die bereits oben beschriebenen üblichen Basislackzusammensetzungen C), welche ein oder mehrere Bindemittel, Rheologiehilfsmittel, Farb- und/oder Effektpigmente und organische Lösemittel enthalten. Nach erneutem Ablüften wird das beschichtete Kunststoffsubstrat mit einem üblichen Klarlack überlackiert. Anschließend werden die aufgebrachten Schichten gemeinsam unter Erwärmen ausgehärtet. Unter kurzem Ablüften ist ein Ablüften beispielsweise bei einer Temperatur zwischen 20 und 50 °C zu verstehen. Als Klarlacke werden übliche im Handel erhältliche witterungsbeständige Klarlacke verwendet. Geeignet hierfür sind beispielsweise isocyanathärtende Zweikomponenten-Klarlacke auf der Basis von Polyester- oder Acrylatharzen. Derartige Lacksysteme sind üblich und dem Fachmann bekannt. Beispiele sind beschrieben in der Druckschrift "Produkte für die Lackindustrie", Band 2, Desmodur/Desmophen der Firma Bayer sowie in Houben Weyl "Methoden der Organischen Chemie", Band 14/2, Makromolekulare Stoffe, Seite 57, Polyurethane, bearbeitet von E. Müller.

Der die Füllstoffpaste A) enthaltende Basislack B) wird derart aufgetragen, daß eine Trockenfilmschichtstärke im Bereich von 12 bis 17 µm resultiert. Der nach kurzer Zwischenablüftung applizierte Füllstoffpasten-freie Basislack wird üblicherweise in einer Trockenfilm-schichtstärke von 7 bis 10 µm aufgebracht.

Das vorstehend beschriebene Verfahren ist besonders zur Beschichtung von Polyolefin-Anbauteilen in der Automobilindustrie geeignet, wobei die Polyolefin-Substrate vorzugsweise aus Polypropylen und Polypropylen-Blends, beispielsweise Kautschuk-Polypropylen-Blends, gefertigt werden. In Abhängigkeit vom Typ des Polyolefin-Substrats sowie vom Füllstoffgehalt der Basislackzusammensetzung B) sowie den Spritzguß- und Vorreinigungsparametern besteht die Möglichkeit, die Polyolefin-Substrate sowohl mit als auch ohne Vorbehandlung, wie z. B. Beflammen, Plasma, Corona-Entladung, zu beschichten. Besonders bevorzugt werden in dem erfindungsgemäßen Verfahren als Polyolefin-Substrate Kraftfahrzeugteile aus Kunststoff mit einem Polypropylengehalt von bis zu 100 Gew.-% verwendet. Der Vorteil des erfindungsgemäßen Verfahrens liegt insbesondere darin, daß auf die üblicherweise notwendige vorherige Grundierung bzw. Vorlackierung unter Verwendung von Haftvermittlern verzichtet werden kann. Durch den Zusatz der erfindungsgemäßen Füllstoffpaste A) zu einem üblichen Basislacksystem C) wird eine ausgezeichnete Haftung sowie eine gleichzeitige hervorragende Abdeckung der üblichen Substratfehler, beispielsweise Schlieren, Fließlinien und Poren, erzielt. Durch die anschließende Beschichtung mit einem Füllstoffpasten-freien Basislack wird eine hervorragende Wetterstabilität und Farbtongenauigkeit der erhaltenen Beschichtungen erreicht. Die Verwendung der Füllstoffpaste A) ist für das hohe technologische Niveau des Gesamtsystems, beispielsweise hinsichtlich Steinschlagbeständigkeit, verantwortlich. Das Vorliegen von Farb- und/oder Effektpigmenten des gewünschten Farbtons bereits in der ersten, modifzierten Basislackschicht ermöglicht das überlackieren mit einer sehr dünnen abschließenden Basislackschicht. Der Auftrag aller Lackschichten erfolgt üblicherweise durch pneumatische Spritzapplikationen. Beim Einsatz elektrisch leitfähiger Pigmente in der erfindungsgemäßen Füllstoffpaste A) ist eine elektrostatische Applikation der weiteren Lackschichten möglich.

Die vorliegende Erfindung betrifft ebenfalls die Verwendung der Füllstoffpaste A) in Basislacken zur grundierungsfreien Beschichtung von Polyolefin-Substraten sowie die Verwendung des die Füllstoffpaste A) enthaltenden Basislackes B) zur grundierungsfreien Beschichtung von Polyolefin-Substraten.

Nachfolgend wird die Erfindung anhand von Ausführungsbeispielen näher erläutert. Dabei bedeuten Teile Gewichtsteile, sofern nichts anderes angegeben wird.

### Herstellung einer hellen Pigmentpaste A1:

50 % einer 51%igen Lösung eines Polyurethanelastomers (Handelsprodukt Uraflex XP 221 der Firma DSM) und 50 % Titandioxid (Handelsprodukt Titan Rutil 2057) werden 15 min dissolvert und anschließend 45 min lang bei max. 50 °C auf einer Perlmühle bis zu einer Kornfeinheit von < 15 µm gemahlen. Das Mahlgut, als 50 % des Gesamtrezepts berechnet, wird mit weiteren 50 % eines 7:3-Gemisches aus dem gleichen Polyurethanharz und einer 25%igen Lösung eines chlorierten Polyolefins (Handelsprodukt Eastman CP 343-1 der Firma Eastman) aufgelackt.

### Herstellung einer dunklen, leitfähigen Füllstoffpaste A2:

Es wird analog der Herstellung der hellen Pigmentpaste Al verfahren mit dem Unterschied, daß statt 50 % Titandioxid 47 % Titandioxid und 3 % Leitruß (Handelsprodukt Ketjen Black der Firma AKZO) eingemahlen werden.

### Herstellung des modifizierten Basislacks B1:

70 % eines konventionellen Medium-Solid-Metallic-Basislackes (GE 70 - 79-Reihe der Firma BASF Lacke + Farben AG) werden unter Rühren mit 30 % der Füllstoffpaste A1 versetzt und mit einem 1:2:1-Gemisch aus Butylacetat, Methoxypropylacetat und Xylol auf eine Spritzviskosität von 20 DIN 4 sec. eingestellt.

### Herstellung des modifizierten Basislackes B2:

Es wird wie bei der Herstellung des modifizierten Basislackes B1 verfahren mit dem Unterschied, daß die Füllstoffpaste A2 anstelle der Füllstoffpaste A1 verwendet wird.

### Beispiel 1:

### Pneumatische Lackierung

Tafeln oder Anbauteile aus Polypropylen/Kautschuk-Blends (25 Gew.-% EPDM, 75 Gew.-% Polypropylen) werden mit Isopropanol gewaschen und getrocknet. Der zuvor beschriebene Basislack B1 wird mit einer Fließbecherpistole (Spritzdruck: 4-5 bar, 1,3 mm Düse) in einem Kreuzgang aufgetragen. Die Trockenschichtstärke erreicht dabei 12 bis 17 µm. Nach ca. 2 bis 3 min. Ablüften bei Kabinentemperatur erfolgt der Auftrag des unmodifizierten Basislackes in einem weiteren Kreuzgang. Die Trockenschichtstärke der unmodifizierten Basislackschicht beträgt ca. 7 bis 10 µm. Es erfolgt während 5 min bei Raumtemperatur eine Ablüftung. Dann wird ein handelsüblicher zweikomponentiger Polyurethan-Klarlack auf Polyesterbasis (Handelsprodukt GP 71-0102 der Firma BASF Lacke + Farben AG) nach dem Ablüftvorgang mit gleichen Spritzparametern in 2 Kreuzgängen aufgetragen, so daß eine Trockenfilm-Schichtstärke von 25 bis 35 µm resultiert. Das lackierte Kunststoffteil wird nach weiteren 10 bis 15 min Ablüften bei 80 °C 30 min in einem Umluftofen getrocknet.

### Beispiel 2:

### Elektrostatische Lackierung

Der Auftrag der beiden Basislackschichten wird analog Beispiel 1 durchgeführt, wobei als Füllstoffpastenmodifizierter Basislack der Basislack B2 eingesetzt wird. Die Lackierung des im Beispiel 1 verwendeten Klarlacks erfolgt nun nach Erdung des Teils über elektrostatisch unterstützte pneumatische Pistolen oder über eine Hochrotationsglocke.

### Technologische Prüfungen:

Die lackierten Teile werden 7 Tage bei Raumtemperatur bzw. 24 h forciert bei 60 °C gealtert. Folgende Testergebnisse werden in den Beispielen 1 und 2 erhalten:

Gitterschnitt mit Tesaabriß (DIN 53 151): Wert 0 Dampfstrahltest nach BMW: i. O. (keine Abplatzung) Steinschlag nach BMW: 0 (keine Abplatzung) Blasen nach 240 h Konstantklima: mogo/gt ebenfalls 0

## Patentansprüche

1. Basislack B) zur Beschichtung von Polyolefin-Substraten, dadurch gekennzeichnet, daß er 10 bis 70 Gew.-% einer Füllstoffpaste A) und 90 bis 30 Gew.-% einer üblichen Basislackzusammensetzung C), enthaltend ein oder mehrere Bindemittel, gegebenenfalls Rheologiehilfsmittel, Farb- und/oder Effektpigmente und organische Lösemittel, enthält, wobei das Gesamtgewicht des Basislackes B) 100 Gew.-% beträgt und wobei die Füllstoffpaste A)
a1) 5 bis 50 Gew.-% eines Polyurethanharzes oder mehrerer Polyurethanharze,
a2) 0,5 bis 13 Gew.-% eines oder mehrerer chlorierter Polyolefine mit einem Chlorgehalt von 10 bis 40 Gew.-%, bezogen auf den Festkörper der chlorierten Polyolefine, und einem zahlenmittleren durchschnittlichen Molekulargewicht von 5 000 bis 150 000,
a3) 0 bis 50 Gew.-% eines oder mehrerer von a1) sich unterscheidender physikalisch trocknender Bindemittel,
a4) 5 bis 35 Gew.-% eines oder mehrerer Füllstoffe und/oder Extender,
a5) 0 bis 15 Gew.-% Farb- und/oder Effektpigmente,
a6) 0 bis 5 Gew.-% eines oder mehrerer Rheologiehilfsmittel und
a7) 20 bis 60 Gew.-% organische Lösemittel, enthält, wobei die Summe der Komponenten a1) bis a7) jeweils 100 Gew.-% beträgt und wobei das Verhältnis (alle anorganischenBestandteile) : (Bindemittel) 1 : 0,6 - 2,0 beträgt.

2. Basislack B) nach Anspruch 1, dadurch gekennzeichnet, daß die Füllstoffpaste A) 30 bis 45 Gew.-% der Komponente a1) und 0 bis 10 Gew.-% der Komponente a3) enthält.

3. Basislack B) nach Anspruch 1 oder 2, dadurch gekennzeichnet, daß er 30 bis 60 Gew.-% der Füllstoffpaste A) und 70 bis 40 Gew.-% der Basislackzusammensetzung C) enthält.

4. Verfahren zur Direktlackierung von Polyolefin-Substraten, dadurch gekennzeichnet, daß direkt auf das Polyolefin-Substrat der Basislack B) gemäß einem der Ansprüche 1 bis 3 aufgebracht wird, nach kurzer Zwischenablüftung ein Füllstoffpasten-freier Basislack appliziert wird, nach kurzem Ablüften mit einem Klarlack überlackiert wird und anschließend gemeinsam unter Erwärmen ausgehärtet wird.

5. Verfahren nach Anspruch 4, dadurch gekennzeichnet, daß als Polyolefin-Substrate Kraftfahrzeugteile aus Kunststoff mit einem Polypropylengehalt von bis zu 100 Gew.-% verwendet werden.

6. Verwendung der Füllstoffpaste A) enthaltend
a1) 5 bis 50 Gew.-% eines Polyurethanharzes oder mehrerer Polyurethanharze,
a2) 0,5 bis 13 Gew.-% eines oder mehrerer chlorierter Polyolefine mit einem Chlorgehalt von 10 bis 40 Gew.-%, bezogen auf den Festkörper der chlorierten Polyolefine, und einem zahlenmittleren durchschnittlichen Molekulargewicht von 5 000 bis 150 000,
a3) 0 bis 50 Gew.-% eines oder mehrerer von al) sich unterscheidender physikalisch trocknender Bindemittel,
a4) 5 bis 35 Gew.-% eines oder mehrerer Füllstoffe und/oder Extender,
a5) 0 bis 15 Gew.-% Farb- und/oder Effektpigmente,
a6) 0 bis 5 Gew.-% eines oder mehrerer Rheologiehilfsmittel und
a7) 20 bis 60 Gew.-% organische Lösemittel,
wobei die Summe der Komponenten a1) bis a7) jeweils 100 Gew.-% beträgt und wobei das Verhältnis (alle anorganischen Bestandteile) : (Bindemittel) 1 : 0,6 - 2,0 beträgt, in Basislacken zur grundierungsfreien Beschichtung von Polyolefin-Substraten.

7. Verwendung des Basislackes B) gemäß einem der Ansprüche 1 bis 3 zur grundierungsfreien Beschichtung von Polyolefin-Substraten.

## Claims

1. Basecoat B) for coating polyolefin substrates, characterized in that it contains from 10 to 70% by weight of a filler paste A) and from 90 to 30% by weight of a conventional basecoat composition C) comprising one or more binders, if desired rheological auxiliaries, colour pigments and/or special-effect pigments and organic solvents, the overall weight of the basecoat B) being 100% by weight and the filler paste A) comprising
a1) from 5 to 50% by weight of a polyurethane resin or a plurality of polyurethane resins,
a2) from 0.5 to 13% by weight of one or more chlorinated polyolefins having a chlorine content of from 10 to 40% by weight, based on the solids content of the chlorinated polyolefins, and having a number-average molecular weight of from 5000 to 150,000,
a3) from 0 to 50% by weight of one or more physically drying binders which are different from a1),
a4) from 5 to 35% by weight of one or more fillers and/or extenders,
a5) from 0 to 15% by weight of colour pigments and/or special-effect pigments,
a6) from 0 to 5% by weight of one or more rheological auxiliaries, and
a7) from 20 to 60% by weight of organic solvents,
the sum of components a1) to a7) being in each case 100% by weight and where the ratio (all inorganic components) : (binders) is 1:0.6-2.0.

2. Basecoat B) according to Claim 1, characterized in that the filler paste A) contains from 30 to 45% by weight of the component a1) and from 0 to 10% by weight of the component a3).

3. Basecoat B) according to Claim 1 or 2, characterized in that it contains from 30 to 60% by weight of the filler paste A) and from 70 to 40% by weight of the basecoat composition C).

4. Process for the direct coating of polyolefin substrates, characterized in that the basecoat B) according to one of Claims 1 to 3 is applied directly to the polyolefin substrate, after a brief intermediate flash-off a basecoat which is free from filler pastes is applied, and the basecoats are flashed briefly, coated over with a clearcoat and subsequently cured together, with heating.

5. Process according to claim 4, characterized in that the polyolefin substrates used are motor vehicle components of plastic with a polypropylene content of up to 100% by weight.

6. Use of the filler paste A) comprising
a1) from 5 to 50% by weight of a polyurethane resin or a plurality of polyurethane resins,
a2) from 0.5 to 13% by weight of one or more chlorinated polyolefins having a chlorine content of from 10 to 40% by weight, based on the solids content of the chlorinated polyolefins, and having a number-average molecular weight of from 5000 to 150,000,
a3) from 0 to 50% by weight of one or more physically drying binders which are different from a1),
a4) from 5 to 35% by weight of one or more fillers and/or extenders,
a5) from 0 to 15% by weight of colour pigments and/or special-effect pigments,
a6) from 0 to 5% by weight of one or more rheological auxiliaries, and
a7) from 20 to 60% by weight of organic solvents,
the sum of components a1) to a7) being in each case 100% by weight and the ratio (all inorganic components) : (binders) being 1 : 0.6 - 2.0, in basecoats for the primer-free coating of polyolefin substrates.

7. Use of the basecoat B) according to one of Claims 1 to 3 for the primer-free coating of polyolefin substrates.

## Revendications

1. Vernis de base B) en vue du revêtement de substrats en polyoléfine, caractérisé en ce qu'il contient de 10 à 70 % en poids d'une pâte de pigment de charge A) et de 90 à 30 % en poids d'une composition de vernis de base habituelle C), contenant un ou plusieurs liants, le cas échéant, des agents de contrôle de la rhéologie, des pigments colorés et/ou des pigments à effet et des solvants organiques, le poids total du vernis de base B) étant de 100 % en poids et la pâte de pigment de charge A) contenant
a1) de 5 à 50 % en poids d'une résine de polyuréthanne ou de plusieurs résines de polyuréthanne,
a2) de 0,5 à 13 % en poids d'une ou de plusieurs polyoléfines chlorées ayant une teneur en chlore de 10 à 40 % en poids, par rapport à la teneur en matières solides des polyoléfines chlorées, et un poids moléculaire moyen en nombre de 5 000 à 150 000,
a3) de 0 à 50 % en poids d'un ou de plusieurs liants, différents de a1), à dessiccation physique,
a4) de 5 à 35 % en poids d'une ou de plusieurs charges et/ou d'un ou de plusieurs diluants,
a5) de 0 à 15 % en poids de pigments colorés et/ou de pigments a effet,
a6) de 0 à 5 % en poids d'un ou de plusieurs agents ce contrôle de la rhéologie et
a7) de 20 à 60 % en poids de solvants organiques,
la somme des composants a1) à a7) étant à chaque fois de 100 % en poids, et le rapport (tous les constituants organiques) : (liants) étant de 1 : 0,6 - 2,0.

2. Vernis de base B) selon la revendication 1, caractérisé en ce que la pâte de pigment de charge A) contient de 30 à 45 % en poids du composant a1) et de 0 à 10 % en poids du composant a3).

3. Vernis de base B) selon la revendication 1 ou 2, caractérisé en ce qu'il contient de 30 à 60 % en poids de la pâte de pigment de charge A) et de 70 à 40 % en poids de la composition de vernis de base C).

4. Procédé de vernissage direct de substrats en polyoléfine, caractérisé en ce que l'on procède à l'application directe, sur le substrat en polyoléfine, du vernis de base B), conformément à l'une quelconque des revendications 1 à 3, que l'on procède, après une courte ventilation intermédiaire, à l'application d'un vernis de base exempt de pâte de pigment de charge, que l'on procède, après une courte ventilation, au survernissage à l'aide d'un vernis clair, et que l'on procède ensuite au durcissement conjoint par chauffage.

5. Procédé selon la revendication 4, caractérisé en ce que l'on utilise, en tant que substrats en polyoléfine, des pièces de véhicules automobiles en matière plastique ayant une teneur en polypropylène allant jusqu'à 100 % en poids.

6. Utilisation de la pâte de pigment de charge A), contenant
a1) de 5 à 50 % en poids d'une résine de polyuréthanne ou de plusieurs résines de polyuréthanne,
a2) de 0,5 à 13 % en poids d'une ou de plusieurs polyoléfines chlorées ayant une teneur en chlore de 10 à 40 % en poids, par rapport à La matière solide des polyoléfines chlorées, en un poids moléculaire moyen au nombre de 5 000 à 150 000,
a3) de 0 à 50 % en poids d'un ou de plusieurs liants, différents de a1), à dessiccation physique,
a4) de 5 à 35 % en poids d'une ou de plusieurs charges et/ou d'un ou de plusieurs diluants,
a5) de 0 à 15 % en poids de pigments colorés et/ou de pigments à effet,
a6) de 0 à 5 % en poids d'un ou de plusieurs agents de contrôle de la rhéologie et
a7) de 20 à 60 % en poids de solvants organiques,
la somme des composants a1) à a7) étant à chaque fois de 100 % en poids, et le rapport (tous les constituants organiques) : (liants) étant de 1 : 0,6 - 2,0, dans des vernis de base en vue du revêtement sans peinture d'apprêt de substrats en polyoléfine.

7. Utilisation du vernis de base B), conformément à l'une quelconque des revendications 1 à 3, en vue du revêtement sans peinture d'apprêt de substrats en polyoléfine.
